# EUROPEAN PATENT APPLICATION

(11) **EP 4 389 537 A1**
(43) Date of publication of application: **26.06.2024**
(21) Application number: 22215559.0
(22) Date of filing: 21.12.2022
(51) Int. Cl.: B60R 21/01, B60R 16/023, G01M 17/007

(54) **IMPROVEMENTS IN OR RELATING TO SELF-DIAGNOSIS OF VEHICLE COMPONENTS**

(71) Applicant: Veoneer Sweden AB, 447 83 Vårgårda (SE)
(72) Inventor: CACLARD, Laurent, 27440 Touffreville (FR)
(74) Representative: Forresters IP LLP

(57) **Abstract**

A vehicle component comprising: a sensing or actuating component; a self-diagnosis component, provided in or adjacent the sensing or actuating component and arranged to acquire diagnostic information from the sensing or actuating component; and an output, to which the self-diagnostic component may output information regarding diagnostic information acquired from the sensor component or actuator component, wherein the intervals between successive acquisitions of diagnostic information from the sensor component or actuator component by the self-diagnostic component vary over time.

## Description

Modern vehicles include many components which are able to perform self-diagnosis, and to report the results of the self-diagnosis to the vehicle's electronic control unit (ECU). If a component, such as an actuator or a sensor, performs self-diagnosis and reports that it is not functioning correctly, or fails to provide a self-diagnosis report, a warning may be provided to the driver of the vehicle, and/or to a remote control centre, indicating that the vehicle requires maintenance or repair.

It is an object of the present invention to provide an improved system and method for self-diagnosis of this type.

Accordingly, one aspect of the present invention provides a vehicle component comprising: a sensing or actuating component; a self-diagnosis component, provided in or adjacent the sensing or actuating component and arranged to acquire diagnostic information from the sensing or actuating component; and an output, to which the self-diagnostic component may output information regarding diagnostic information acquired from the sensor component or actuator component, wherein the intervals between successive acquisitions of diagnostic information from the sensor component or actuator component by the self-diagnostic component vary over time.

Advantageously, the interval between consecutive acquisitions of diagnostic information varies between each successive acquisition.

Preferably, the interval between consecutive acquisitions of diagnostic information falls between a lower interval limit and an upper interval limit.

Conveniently a sequence of interval steps is defined between the upper and lower interval limits.

Advantageously, during operation of the vehicle component, the intervals between consecutive acquisitions increases or decreases in accordance with the interval steps.

Preferably, the interval steps are each of the same or substantially the same duration.

Alternatively, at least some of the interval steps have different durations.

Conveniently, the duration of each interval step increases or decreases progressively over the sequence of interval steps.

Advantageously, intervals between consecutive acquisitions vary between the upper and lower interval limits in accordance with a randomised pattern, or a pre-set pattern which does not follow a progressive increasing and/or decreasing of the interval.

Preferably, in operation, the self-diagnostic component transmits diagnostic information through the output at transmission intervals.

Conveniently, the transmission intervals are constant or substantially constant.

Advantageously, the average of the intervals defined by the interval steps is equal or substantially equal to the transmission intervals.

Another aspect of the present invention provides a vehicle comprising one or more vehicle components according to any one of the above, and a processor, wherein the output of the or each vehicle component is connected to the processor, and the or each vehicle component is configured to transmit diagnostic information to the processor through its output.

A further aspect of the present invention provides a method of providing diagnostic information from vehicle components, comprising the steps of: acquiring, through a self-diagnosis component, diagnostic information from a sensing or actuating component of a vehicle component; and
outputting information regarding the diagnostic information from the vehicle component to a vehicle processor, wherein the intervals between successive acquisitions of diagnostic information from the sensor component or actuator component by the self-diagnostic component vary over time.

Another aspect of the present invention provides a computer program having instructions which, when executed by a computing device or system, cause the computing device or system to perform the above method when run on a computer.

In order that the invention may be more readily understood, embodiments thereafter will now be described, by way of example, with reference to the accompanying drawings, in which:
Figure 1 is a timing diagram illustrating aspects of a conventional method of diagnosis of a vehicle component;
Figure 2 is a further timing diagram, showing the effect of a regular disturbance on the method shown in figure 1; and
Figure 3 is a timing diagram illustrating aspects of a system embodying the present invention.

A vehicle sensor, such as an accelerometer, or vehicle actuator, such a squib for an air-bag, may periodically carry out a self-diagnosis, and report the results of the self-diagnosis to the vehicle's ECU. The details of the self-diagnosis procedure will depend upon the nature of the sensor or actuator, and for a complex sensor or actuator, a check of two or more parameters may be carried out as part of the self-diagnosis procedure.

Each sensor or actuator that performs self-diagnosis will include a self-diagnosis component, which may comprise all or part of a processor or IC located in or adjacent the sensor or actuator. The self-diagnosis component will be connected to other components of the sensor or actuator, and will acquire information from the other components over one or more connections.

As an example of this, periodic diagnosis may be carried out on an airbag initiator (e.g. squib) to check that the impedance of the loops (which may comprise a connector a harness and an initiator) are within an expected range of values, and to check that there is no leakage to the chassis or to the battery. These diagnoses may be carried out, for example, once every 500ms on each actuator, by applying one or more diagnosis stimuli and acquiring (for instance by way of an ADC converter), voltages or currents from the component under test.

In conventional systems, the self-diagnosis component will acquire diagnostic information at regular intervals, for instance every 500ms, and after each acquisition will report the diagnosis results to the ECU. The data transmitted to the ECU may simply comprise one or more signals that have been received from the other components of the sensor or actuator, for analysis by the ECU. Alternatively, the self-diagnosis component of the sensor or actuator may perform analysis on the signals, and may transmit a signal to the ECU which summarises the results of the diagnosis (for instance, a "true" or "false" signal, indicating success or failure).

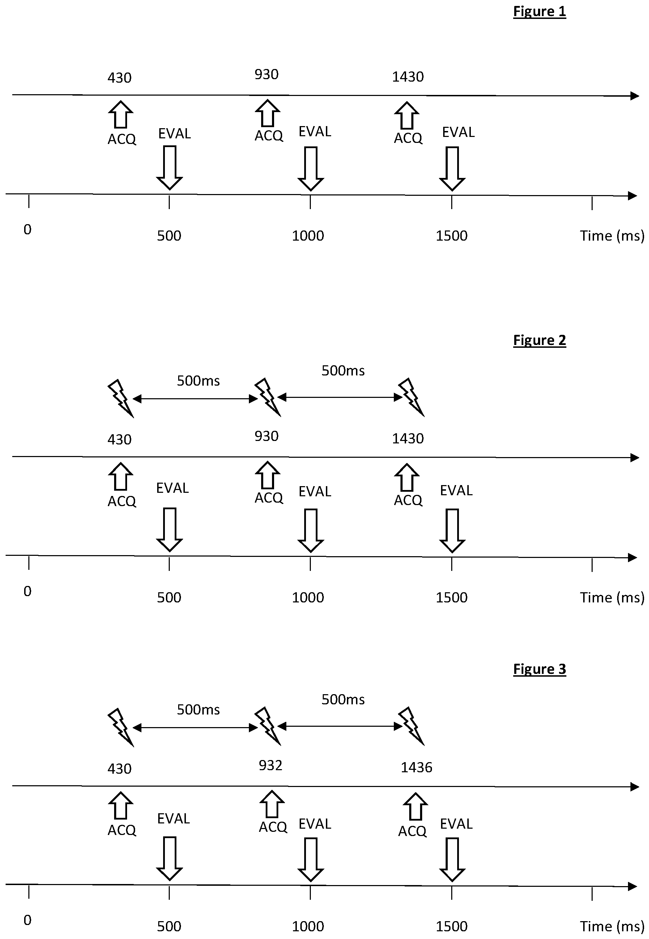

Figure 1 shows a timing diagram representing the operation of a conventional system of this type. The horizontal axis represents time, measured in ms. The upper line shows the times at which diagnostic acquisitions take place, for a sensor or actuator of a vehicle. In a first cycle, the acquisition (represented by "ACQ" on the figure) takes place 430ms after the start of the cycle, and the results of this acquisition are transmitted to the vehicle's ECU 500ms after the start of the cycle (represented by "EVAL" on the figure). In a second cycle, the sequence of events is effectively the same. The next diagnostic acquisition takes place 430ms after the start of the second cycle, which corresponds to 930ms after the start of the first cycle. Once again the results of this are transmitted to the ECU 500ms after the start of the second cycle, corresponding to 1 000ms after the start of the first cycle.

In a third cycle, the acquisition takes place 1430ms after the start of the first cycle, and the results of this are transmitted to the ECU 1500ms after the start of the first cycle.

A sensor or actuator may be mounted in a vehicle in proximity to one or more other components which may give rise to physical or electrical disturbances at various frequencies. For instance, a nearby component may generate significant transients, which can interfere with the self-diagnosis process. One example of a source of disturbance is a high voltage transmission line, such as are found in electric vehicles, connected to a DC/DC converter, which can generate high levels of noise. If a mechanical or electrical disturbance occurs during a self-diagnosis acquisition, the signal that is received by the self-diagnosis component may be distorted or modified in the course of transmission. This may interfere with the correct interpretation of the signal by the self-diagnosis component, giving rise to a false negative or false positive result.

In a worst case, a nearby component may generate mechanical or electrical disturbances at a frequency which substantially matches the frequency with which self-diagnosis information is acquired (in the above example, every 500ms) or at a frequency which is a multiple of the self-diagnosis frequency (for example 50ms or 100ms). If this occurs, a sequence of self-diagnosis readings may be disturbed and/or distorted.

This situation is represented schematically in figure 2. A disturbance created by another component within the vehicle (represented by a lightning symbol) occurs every 500ms, at times coinciding with the acquisitions of self-diagnostic data (i.e. at 430ms, 930ms and 1430ms after the start of the first cycle).

Some conventional systems determine whether a component is functioning correctly by taking the results of three consecutive self-diagnosis acquisitions. A median of these three consecutive readings may be taken. In other examples a sensor or activator may be judged to be malfunctioning if three successive negative self-diagnosis reports are achieved (in such examples a negative result may increment a maturation counter, which will trigger a warning if the counter reaches three, although the counter will be re-set if a positive result is received). If a disturbance is occurring at a frequency which substantially matches the frequency of self-diagnosis (or is a multiple of this frequency), a sequence of three or more readings may be affected, which may lead to an overall false positive or false negative determination by the vehicle's ECU.

In one example of a method embodying the present invention, the self-diagnosis component of a sensor or actuator is configured to perform a self-diagnosis acquisition at intervals which vary over time. For instance, the interval between diagnostic acquisitions may vary, with the interval increasing by 2ms each cycle. This is represented schematically in figure 3. In such a system, the first acquisition may take place 430ms after the start of the first cycle, and the second acquisition may take place 432ms after the start of the second cycle (corresponding to 932ms after the start of the first cycle). The interval between the first and second acquisitions will therefore be 502ms. The third acquisition takes place 436ms after the start of the third cycle (corresponding to 1436ms after the start of the first cycle), and the interval between the second and third acquisitions will therefore be 504ms, and so on.

The intervals between consecutive acquisitions may vary within a predefined range. Once the interval between consecutive acquisitions reaches an upper end of the range, the period may then decrease back to the starting interval, for instance again in steps of 2ms. Alternatively, the intervals may start again from the lower end of the range. Any other suitable scheme may also be used.

In the example given above, the results of the diagnostic acquisitions are transmitted at fixed transmission intervals, which in the current example are 500ms (this is discussed in more detail below). For the diagnostic acquisitions to take place in a way that is consistent with this, it is preferred for the range of intervals between successive diagnostic acquisitions to have a lower end which is shorter than the transmission intervals, and a higher end which is longer than the transmission intervals. As the intervals vary throughout this range, successive acquisitions will still take place within successive transmission intervals.

In preferred embodiments of the invention, the range of intervals has a lower end which is less than the transmission intervals by a first amount, and an upper end which is more than the transmission intervals by the same first amount (or an amount which is substantially the same as the first amount). However, this is not essential, and there are many other ways in which the range can be set that allows the intervals between acquisitions to vary, while ensuring that the acquisitions take place within successive transmission intervals. For example, the average of the intervals within the range can be equal or substantially equal to the transmission interval, without the range being evenly distributed around the transmission interval.

In one example, the lower end of the range of the acquisition intervals is 480ms, and the upper end of the range is 520ms, with the intervals varying by 2ms within this range.

The upper and lower limits of the range are not limited to those discussed above, and may take any suitable values. However, it is envisaged that intervals below a certain length of time between acquisitions will be undesirable, because this period between will not be sufficient for the necessary testing to be carried out during the period. This lower threshold will depend on the nature and operation of the diagnostic process, and the equipment used to carry it out.

The sensor or actuator will also have a minimum diagnosis rate, and the intervals between acquisitions should not interfere with this. As can be seen in the figures, the sensor or actuator transmits the results of each diagnostic test at set times which are separated by 500ms intervals, and the intervals between acquisitions should therefore not be so long that, when one of these set times is reached, data from a new diagnostic acquisition is not available.

The value of the "step" between intervals may also vary, and is not limited to 2ms (or any other fixed value). Steps between intervals may be, for instance, 3ms, 5ms, 10ms or any other suitable value.

It is also envisaged that the size of each step may not be the same. For instance, the increase in the length between two consecutive intervals may be 2ms, and the increase in length between the next two consecutive intervals may be 5ms. However, it is preferred that the lengths of the intervals change in a uniform manner.

Is it also not necessary for the length of the interval to rise and fall progressively. For instance, a range of interval lengths may be divided into a number of "channels" comprising the intervals that fall within the range. In the example given above, the lengths of the intervals may range from 480ms to 520ms, with steps of 2ms, and this represents 21 different channels.

The acquisitions may then take place based on a random sequence of these channels, or on a pre-set pattern of the channels that does not follow a progressive increasing and/or decreasing of the interval.

If a scheme of this kind is used, the skilled person will appreciate that a grouping of relatively short intervals may mean that two diagnostic acquisitions are made in (for example) the same 500ms period between diagnostic results being reported to the vehicle's ECU. Conversely, a grouping of relatively long intervals may mean that no diagnostic acquisition at all is made in a 500ms period between diagnostic results being reported to the vehicle's ECU. The skilled reader will understand that the pattern of channels should be chosen to avoid either of these outcomes.

The skilled reader will appreciate that, if a nearby component generates a disturbance having a regular frequency, varying the interval between consecutive self-diagnostic acquisitions is likely to ensure that the diagnosis process is less affected by these disturbances. If the disturbance occurs at a frequency which matches the interval between two successive acquisitions, these two acquisitions may both be distorted or compromised by the disturbances. However, the interval from the second acquisition to a third acquisition will be different, and hence should not match the frequency of the disturbances. The third acquisition should therefore be unaffected, or substantially less affected.

If a fault in the sensor or actuator is determined following three successive "failures", as discussed above, the third acquisition should generate a successful result, hence re-setting this counter and avoiding a false determination that the sensor or actuator has malfunctioned.

In preferred embodiments, the results of the self-diagnostic process is reported or transmitted to the vehicle's ECU at regular intervals. It is preferred that these intervals are different from, and not dependent upon, the intervals between successive diagnostic acquisitions. These intervals between transmission of the results may be set in accordance with the operation of the vehicle's overall diagnostic system, or another aspect of the timing of one or more systems of the vehicle or its ECU. The skilled reader will appreciate that, if the vehicle contains a large number of sensors and actuators, each of which conducts self-diagnostic tests and transmits the results, it will be preferable for the timing of these transmissions to be regular and predictable.

The skilled reader will appreciate that the reliability of self-diagnosis of vehicle components such as sensors and actuators will be increased in embodiments of the present invention. Some individual self-diagnostic acquisitions may be affected by a disturbance produced by another component within the vehicle. However, subsequent acquisitions are less likely to be affected, leading to an overall more robust self-diagnostic system which is less likely to produce either false positive or false negative readings.

When used in this specification and the claims, the term "comprises" and "comprising" and variations thereof mean that specified features, steps or integers and included. The terms are not to be interpreted to exclude the presence of other features, steps or compounds.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilized for realising the invention in diverse forms thereof.

## Claims

1. A vehicle component comprising:
a sensing or actuating component;
a self-diagnosis component, provided in or adjacent the sensing or actuating component and arranged to acquire diagnostic information from the sensing or actuating component; and
an output, to which the self-diagnostic component may output information regarding diagnostic information acquired from the sensor component or actuator component,
wherein the intervals between successive acquisitions of diagnostic information from the sensor component or actuator component by the self-diagnostic component vary over time.

2. A vehicle component according to claim 1, wherein the interval between consecutive acquisitions of diagnostic information varies between each successive acquisition.

3. A vehicle component according to claim 1 or 2, wherein the interval between consecutive acquisitions of diagnostic information falls between a lower interval limit and an upper interval limit.

4. A vehicle component according to claim 3, wherein a sequence of interval steps is defined between the upper and lower interval limits.

5. A vehicle sensor according to claim 4, wherein, during operation of the vehicle component, the intervals between consecutive acquisitions increases or decreases in accordance with the interval steps.

6. A vehicle sensor according to claim 4 or 5, wherein the interval steps are each of the same or substantially the same duration.

7. A vehicle sensor according to claim 4 or 5, wherein at least some of the interval steps have different durations.

8. A vehicle sensor according to claim 7, wherein the duration of each interval step increases or decreases progressively over the sequence of interval steps.

9. A vehicle component according to any one of claims 4 to 8, wherein intervals between consecutive acquisitions vary between the upper and lower interval limits in accordance with a randomised pattern, or a pre-set pattern which does not follow a progressive increasing and/or decreasing of the interval.

10. A vehicle component according to any preceding claim, wherein, in operation, the self-diagnostic component transmits diagnostic information through the output at transmission intervals.

11. A vehicle component according to claim 10, wherein the transmission intervals are constant or substantially constant.

12. A vehicle component according to claim 11, when dependent upon any one of claims 4 to 9, wherein the average of the intervals defined by the interval steps is equal or substantially equal to the transmission intervals.

13. A vehicle comprising one or more vehicle components according to any one of claims 1 to 12, and a processor, wherein the output of the or each vehicle component is connected to the processor, and the or each vehicle component is configured to transmit diagnostic information to the processor through its output.

14. A method of providing diagnostic information from vehicle components, comprising the steps of:
acquiring, through a self-diagnosis component, diagnostic information from a sensing or actuating component of a vehicle component; and
outputting information regarding the diagnostic information from the vehicle component to a vehicle processor,
wherein the intervals between successive acquisitions of diagnostic information from the sensor component or actuator component by the self-diagnostic component vary over time.

15. A computer program having instructions which, when executed by a computing device or system, cause the computing device or system to perform the method of claim 14 when run on a computer.
